# EUROPEAN PATENT SPECIFICATION

(11) **EP 4 440 490 B1**
(45) Date of publication and mention of the grant of the patent: **15.07.2026**
(21) Application number: 22822217.0
(22) Date of filing: 23.11.2022
(51) Int. Cl.: A61C 8/00

(54) **SINUS BURR AND KIT FOR THE EXECUTION OF TRANS-SINUS DENTAL IMPLANT OPERATIONS**
SINUSBOHRER UND KIT ZUR DURCHFÜHRUNG VON TRANSSINUS-ZAHNIMPLANTATOPERATIONEN
FRAISE DE SINUS ET KIT POUR L'EXÉCUTION D'OPÉRATIONS D'IMPLANT DENTAIRE TRANS-SINUS

(30) Priority: 29.11.2021 IT 202100030149
(43) Date of publication of application: 09.10.2024
(73) Proprietor: J DENTAL CARE SRL, 41123 Modena (MO) (IT)
(72) Inventor: GRANDI, Tommaso, 41123 Modena (MO) (IT)
(74) Representative: Luppi, Emanuele
(86) International application number: PCT/IB2022/061328
(87) International publication number: WO 2023/095015

(56) References cited:
- CN-A- 111 419 435
- US-A- 5 564 926

## Description

### Technical Field

The present invention relates to a sinus burr and a kit for the execution of trans-sinus dental implant operations.

### Background Art

As is well known, a dental implant substantially consists of a screw that is located inside the alveolar bone to replace a tooth that is extracted or is missing. This allows an abutment, protruding externally from the cavity and having a structural function, to be attached thereto.

The abutment can be of various types and can be replaced if, e.g., damaged.

Finally, a dental crown is placed on the abutment, replacing the missing tooth in appearance and function.

In cases of full implant rehabilitations of the edentulous maxillary dental arch, it is sometimes necessary to position a dental implant through the maxillary sinus cavity.

This occurs in those cases where the patient has vertical bone atrophy of the posterior sectors in the premolar/molar area and bone grafting techniques are to be avoided.

The aforementioned implant, called "trans-sinus", is inserted starting from the residual bone ridge in the premolar/molar area and is angled in an anterior direction, passing through the maxillary sinus cavity and anchoring in its apical section at the base of the nasal fossae, at the canine abutment.

Trans-sinus implant installation allows avoiding traditional techniques of bone regeneration within the maxillary sinus, which have greater surgical invasiveness, longer treatment times, higher costs and the possibility of increased infectious complications.

Indeed, in these cases, the patient not only has to undergo several surgical operations spread over a relatively extended time frame, but also finds himself, precisely because of this time frame, to be without teeth for a long time, with obvious functional and aesthetic discomfort.

**In** addition to this, the morbidity of the implant treatment is much greater in the case of bone regeneration techniques, as is the need for taking drugs due to the numerous surgical operations.

**In** contrast, the placement of a trans-sinus implant has many advantages, including the following ones:
- the placement of a longer implant that anchors in the native bone;
- the creation of a tricorticalism (i.e., residual bone ridge, maxillary sinus cortical and nasal cortical) to increase implant anchorage;
- the reduction of the prosthetic cantilever that allows avoiding excessive stress on the implant-abutment and abutment-prosthesis connection screws.

So, when possible, trans-sinus implant placement represents a "graftless" solution that is highly valued to date by dental surgeons and patients.

With particular reference to the trans-sinus implant installation operations, the use is well known of cylindrical burrs with a constant cross-section working along their entire length aimed at removing part of the bone to allow the installation of the dental implant at the canine abutment.

This burring operation is necessary, in particular, in order to ensure sufficient space for the implant to be grafted at the base of the nasal fossae and, at the same time, to ensure the introduction of the implant through the maxillary sinus at the correct angle.

It is good to keep in mind, in this regard, that the trans-sinus implant must be inserted at a very precise angle to reach the canine abutment.

Otherwise, in fact, implant installation would be inconveniently precarious and unstable, thus undermining the successful outcome of the implant rehabilitation.

Taking all this into consideration, the use of the aforementioned known burrs is not indicated for trans-sinus implant preparation for the following reasons:
- the preparation of the trans-sinus implant must be differentiated between coronal portion and apical portion. By passing through a certain portion through the sinus cavity, in fact, the trans-sinus implant is in the "void" by a variable distance depending on the sinus pneumatization. It is, therefore, critical to adequately under-prepare the apical portion of the osteotomy at the canine abutment to stabilize the apex of the implant. Such under-preparation cannot, however, also be done at the level of the residual bone ridge as this would lead to excessive compression of the cortical resulting in its re-absorption, even to fracture of the residual bone ridge;
- once the burrs have penetrated inside the maxillary sinus in the premolar/molar area, it is necessary to perforate the sinus again in its anterior wall to reach the canine abutment. **In** this case, one works with the burr on an inclined cortical bone plane and it is very difficult to keep the burr with the desired inclination because its tip tends to slide on the inclined plane upwards. Such slippage causes the burr to perforate at the level of the lateral wall of the nose where the bone amount and quality is much poorer than the canine abutment located lower down, thus drastically reducing the stability of the trans-sinus implant.

**In** other words, the surgical technique just described greatly complicates the bone perforating operations for the operator who runs the real risk of installing the implant with an incorrect inclination resulting in a lack of stability of the implant itself and therefore in the inability to use it to support prosthetic rehabilitation.

To solve at least part of the aforementioned drawbacks, surgical techniques, known as "guided", are known in which the operator is facilitated during the bone burring operation by means of surgical templates with one or more metal bushings introduced into the patient's oral cavity having the function of guiding the burr.

Specifically, the bushing has a cylindrical cavity that serves as a template for the operator, that is, by guiding the bone burring and thus reducing the possibility of error.

**In** this regard, it should be considered that the peculiar feature of this surgical technique evidently requires the use of burrs specially constructed for this purpose.

Specifically, the burrs used in this particular surgical technique are provided with a proximal portion that can be operated in rotation, a non-working median portion that can be inserted to size within the cylindrical cavity of the bushing and an apical working portion adapted to remove the bone and having a thickness less than that of the non-working median portion.

Such burrs are also provided with a stop element, known by the technical term "stopper", which is positioned between the proximal portion and the non-working median portion and is sized with a larger diameter than the latter.

Specifically, the stop element is sized with a diameter that allows it to stop against the bushing once the burr has reached a predetermined insertion depth.

**In** other words, the special construction of such burrs allows the operator to introduce the apical working portion at a gradually increasing depth until the stop element is stopped against the bushing and, in doing so, stops the forward movement of the burr into the canine abutment.

This makes it possible, usefully, to remove the right amount of bone to install, in the hole thus obtained, the corresponding trans-sinus implant.

The use of bushings clearly allows the operator to work in a smooth and guided manner, by removing the right amount of bone at the right angle and without risking inconvenient twisting of the burr.

It should be borne in mind, however, that such bushings are provided with considerable dimensions; in fact, the cylindrical cavity usually has a diameter of 5 mm (so that the implant, which is known to have a maximum diameter of about 4-5 mm, can be inserted into it later) and a depth of 9 mm (so that a sufficiently long surface area can be arranged to efficiently guide the burr) which, in the context of the trans-sinus implant installation, can greatly complicate the burring operations.

**In** fact, in this case, the length of the burrs used must not only allow for inclined penetration from the premolar/molar area to the canine abutment, but must also be sufficient to compensate for the total dimensions introduced by the presence of the bushing protruding from the patient's jaw.

This evidently forces the use of burrs of considerable length which, in actual facts, are only usable for those few patients who are able to open their mouths wide enough to allow the burr to be inserted inside at the correct angle.

In other words, the guided surgical technique can be adopted only for those few patients who possess sufficient mouth opening to introduce the burrs involved, and this consequently limits its widespread use.

Known types of sinus burrs are disclosed in patent documents CN111419435A and US5564926A.

### Summary of the Invention

The present invention is defined in the appended claims.

The main aim of the present invention is to devise a sinus burr and a kit for the execution of trans-sinus dental implant operations that will enable the implementation of at least partial improvements to the aforementioned drawbacks.

Another object of the present invention is to apply these improvements in the context of a wide range of surgical case histories.

Finally, the object of the present invention is to devise a sinus burr and a kit for the execution of trans-sinus dental implant operations that will overcome the aforementioned drawbacks of the prior art within the framework of a simple, rational, easy and effective to use as well as cost-effective solution.

The aforementioned objects are achieved by this sinus burr for the execution of trans-sinus dental implant operations having the characteristics of claim 1.

The aforementioned objects are achieved by this kit for the execution of trans-sinus dental implant operations having the characteristics of claim 4.

### Brief Description of the Drawings

Other characteristics and advantages of the present invention will become more apparent from the description of a preferred, but not exclusive, embodiment of a sinus burr and a kit for the execution of trans-sinus dental implant operations, illustrated by way of an indicative, yet non-limiting example, in the accompanying tables of drawings in which:
Figure 1 is a front view of the kit according to the invention;
Figures 2 through 8 show, in sequence, the operation of the kit according to the invention.

### Embodiments of the Invention

With particular reference to these figures, reference numeral 1 globally indicates a kit for the execution of trans-sinus dental implant operations.

The kit 1 for the execution of trans-sinus dental implant operations comprises at least one sinus burr 2, 3 for the execution of trans-sinus dental implant operations.

The sinus burr 2, 3 of the present invention comprises:
- at least one proximal portion 4 connectable to at least one tool S, e.g. of the type of a dentist drill, for the setting in rotation thereof around at least one axis of rotation;
- at least one non-working median portion 5 which has a characteristic diameter A comprised between 3.0mm and 3.6 mm and is adapted to be fitted inside a corresponding bony canal 6, obtained through the maxillary bone crest, without removal of the maxillary bone 7.

The proximal portion 4 consists of a stem provided with one end shaped to be coupled to the tool S and with one end, opposite the previous one, connected to the non-working median portion 5.

With reference to the bony canal 6 just mentioned, the term "corresponding" is intended to mean that the bony canal 6 has a diameter substantially coincident with the characteristic diameter A.

This means, in actual facts, that the non-working median portion 5 is insertable to size within the bony canal 6.

It is emphasized, in this regard, that providing a characteristic diameter A comprised between 3.0mm and 3.6 mm allows obtaining numerous operational advantages which are precisely related to this specific range of values.

Specifically, the fact of providing a characteristic diameter A greater than 2.8 mm allows the non-working median portion 5 to be used as a template to facilitate and guide the operator during burring.

A non-working median portion 5 having a diameter greater than 2.8 mm allows, in actual facts, the corresponding bony canal 6 to be used directly as a guide, thus not requiring, therefore, the use of any additional components (such as, e.g., metal bushings or other components known to the expert in the field) to guide the movements of the sinus burr 2, 3.

This is advantageous for multiple reasons.

First of all, this allows the use of short length sinus burrs 2, 3 and, therefore, trans-sinus dental implant operations to be carried out smoothly and effectively with any patient, regardless of the latter's maximum oral opening width and physiognomy.

Second, since no additional components are required to be purchased in order to guide the sinus burr 2, 3 and carry out the operation smoothly, the overall costs imposed on the operator and, consequently, on the patient can be significantly lowered.

In other words, the non-working median portion 5 turns out to be fittable into a bony canal 6 wide enough to serve as a guide for the sinus burr 2, 3 during trans-sinus dental implant operation and, at the same time, to avoid inconvenient twisting of the sinus burr itself, which would cause perforations in undesirable directions.

Similarly, the fact of providing a characteristic diameter A of less than 4.0 mm allows for trans-sinus dental implant operations to be carried out by ensuring operational conditions of implant bicorticalism.

In this regard, in fact, it is good to keep in mind that the patients who show vertical bone atrophy of the posterior sectors in the premolar/molar area have a rather small bone surface on which to carve out the bony canal 6.

Providing for a characteristic diameter A of less than 4.0 mm allows, therefore, the non-working median portion 5 to be fitted to size within a corresponding bony canal 6 that preserves an adequate amount of maxillary bone 7 and proportionate to the patient's clinical condition.

In other words, the non-working median portion 5 can be fitted into a bony canal 6 narrow enough to be safely viable even in patients suffering from vertical bone atrophy of the posterior sectors in the premolar/molar area. Ultimately, providing for a non-working median portion 5 having a characteristic diameter A of between 3.0mm and 3.6 mm makes it possible to greatly simplify the trans-sinus dental implant operation, to cut down the costs burdening the operator for the purchase of the required tools and components, to directly use the bony canal 6 as a guide for the sinus burr 2, 3 and to implement a safe surgical operation on any patient, regardless of the latter's physiognomy.

In this regard, the present invention foresees that the characteristic diameter A is of between 3.0 mm and 3.6 mm.

Better still, the characteristic diameter A is of between 3.1 mm and 3.3 mm.

Conveniently, the characteristic diameter is 3.2 mm.

Usefully, the non-working median portion 5 is substantially shaped as a right cylinder.

**In** this sense, the length of the non-working median portion 5 (coinciding, therefore, with the height of the straight cylinder) is of between 12 mm and 21 mm, even better of between 13 mm and 20 mm, preferably of between 14 mm and 19 mm.

This allows the non-working median portion 5 to be fitted to size within a corresponding bony canal 6 without determining, on the latter, any significant removal of maxillary bone 7.

**In** this sense, in fact, the non-working median portion 5 is provided with at least one smooth cylindrical surface 8 adapted to be placed in sliding contact with the bony canal 6.

It should be specified that the expression "sliding contact" refers to the fact that the non-working median portion 5 can be rotated freely within the bony canal 6 without this resulting in the frictional removal of significant amounts of maxillary bone 7.

**In** actual facts, the term "sliding contact" means that the coefficient of rolling friction between the non-working median portion 5 and the bony canal 6 is particularly low.

**In** addition, the non-working median portion 5 is provided with a plurality of reference markings 9 arranged on the smooth cylindrical surface 8.

Specifically, the reference markings 9 are obtained circumferentially around the smooth cylindrical surface 8.

**In** the present case, the reference markings 9 have a substantially right-cylinder conformation.

Again, the reference markings 9 are arranged longitudinally along the smooth cylindrical surface 8.

Precisely, in the preferred embodiment shown in the figures, the non-working median portion 5 is provided with two reference markings 9.

The reference markings 9 guide the operator during the use of the sinus burr 2, 3 and, as will be better explained later, allow removing a precise amount of bone proportionate to the specific needs of the surgical operation.

The sinus burr 2, 3 then comprises at least one apical working portion 10, 11 which has at least one substantially smaller working diameter B1, B2 than the characteristic diameter A and is adapted to perforate the anterior wall 12 of the maxillary sinus 13 to obtain at least one apical hole 14, 15 on the anterior wall 12.

In the present case, the proximal portion 4, the non-working median portion 5 and the apical working portion 10, 11 are aligned along a geometric axis (longitudinal axis of the sinus burr 2,3) that coincides with the axis of rotation R.

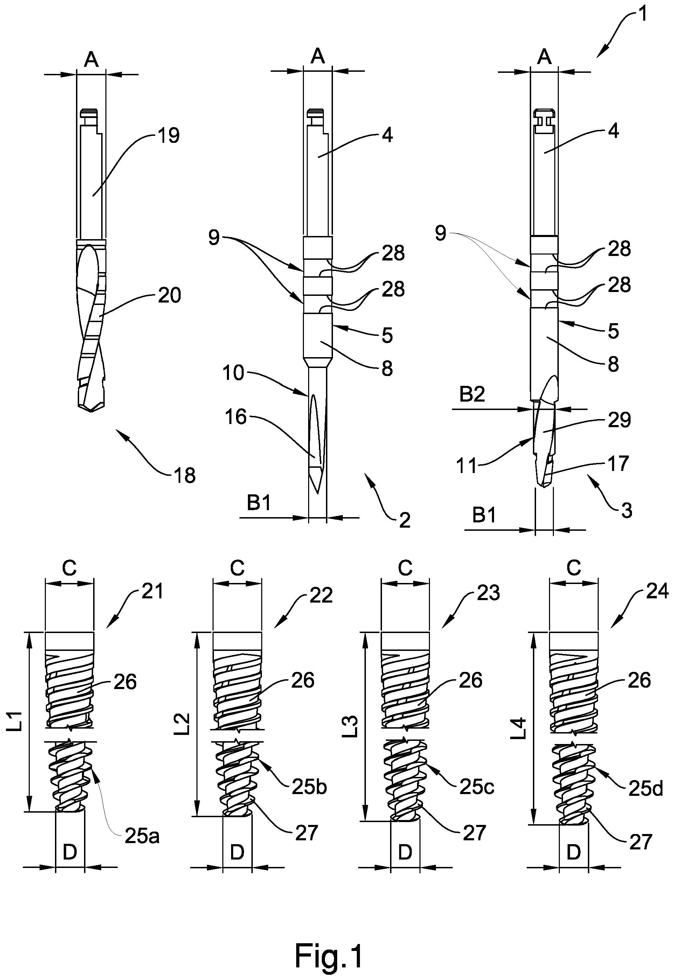

As shown in Figure 1, the kit 1 comprises at least two sinus burrs 2, 3, including at least one first sinus burr 2.

Overall, the first sinus burr 2 has a length of between 38.6 mm and 46.6 mm, better still of between 40.6 mm and 44.6 mm, preferably of 42.6 mm.

The first sinus burr 2 comprises a first apical working portion 10 that has a first working diameter B1 and is adapted to obtain at least a first apical hole 14 on the anterior wall 12.

Usefully, the first working diameter B1 is of between 1.6 mm and 2.4 mm, better still of between 1.8 mm and 2.2 mm, preferably of 2.0 mm.

In addition, the first apical working portion 10 has a length of between 12 mm and 16 mm, preferably of between 13 mm and 15 mm, preferably of 14 mm.

The first apical working portion 10 comprises, in particular, at least one pointed end 16 having a decreasing cross-section in the direction away from the non-working median portion 5.

In other words, the cross-section of the pointed end 16 is maximum in the proximity of the non-working median portion 5 and progressively decreases away from the latter to substantially define a tip.

**In** this regard, the terms "pointed" and "tip" refer, in the substance of this disclosure, to a sharp body provided with lateral inclined and incident surfaces to define an angle of between 50° and 70° between them.

Preferably, this angle is, in the case of the pointed end 16, precisely equal to 60°.

The pointed end 16 has a length of between 10 mm and 12 mm, better still of between 10.5 mm and 11.5 mm, preferably of 11 mm.

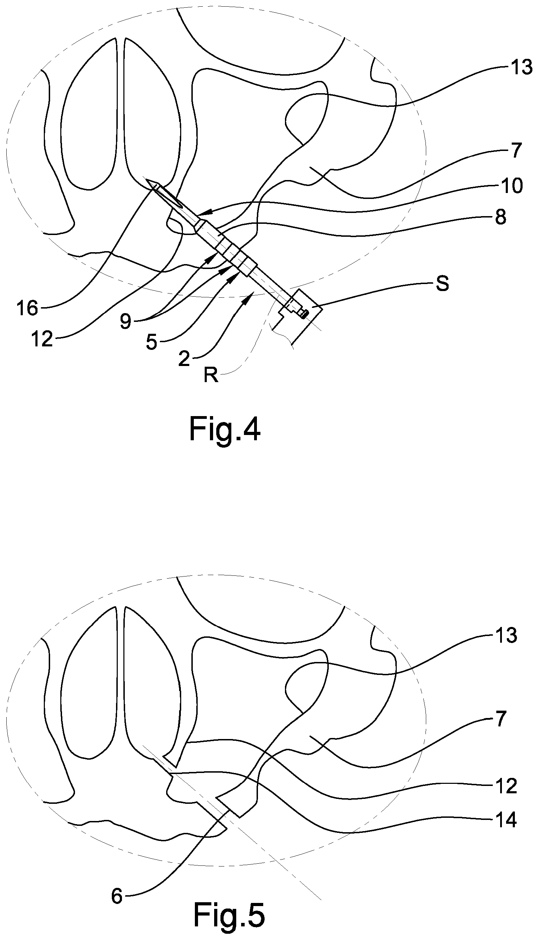

It is specified that the special expedient of providing a pointed end 16 allows the hard anterior wall 12 of the maxillary sinus 13 to be effectively scratched, making on the latter, as shown in Figure 4 and Figure 5, a first apical hole 14 in a smooth and precise manner.

**In** addition, with reference to the two sinus burrs 2, 3 previously mentioned, the kit 1 comprises at least a second sinus burr 3.

Overall, the second sinus burr 3 has a length of between 38.14 mm and 46.14 mm, better still of between 40.14 mm and 44.14 mm, preferably of 42.14 mm.

The second sinus burr 3 comprises a second apical working portion **11** which has a second working diameter B2 substantially greater than the first working diameter B1.

Specifically, the length of the second apical working portion **11** is of between 12 mm and 8 mm, better still of between 11 mm and 9 mm, preferably of 10 mm.

The second working diameter B2 is of between 2.0 mm and 2.8 mm, better still of between 2.2 mm and 2.6 mm, preferably of 2.4 mm.

In all cases, the first working diameter B1 and the second working diameter B2 must be selected, within the aforementioned ranges, in such a way that the ratio of magnitude between the two remains valid and, specifically, the fact that the first working diameter B1 is smaller than the second working diameter B2.

Advantageously, the second apical working portion **11** can be fitted into the first apical hole 14 to obtain at least a second apical hole 15 substantially larger than the first apical hole 14.

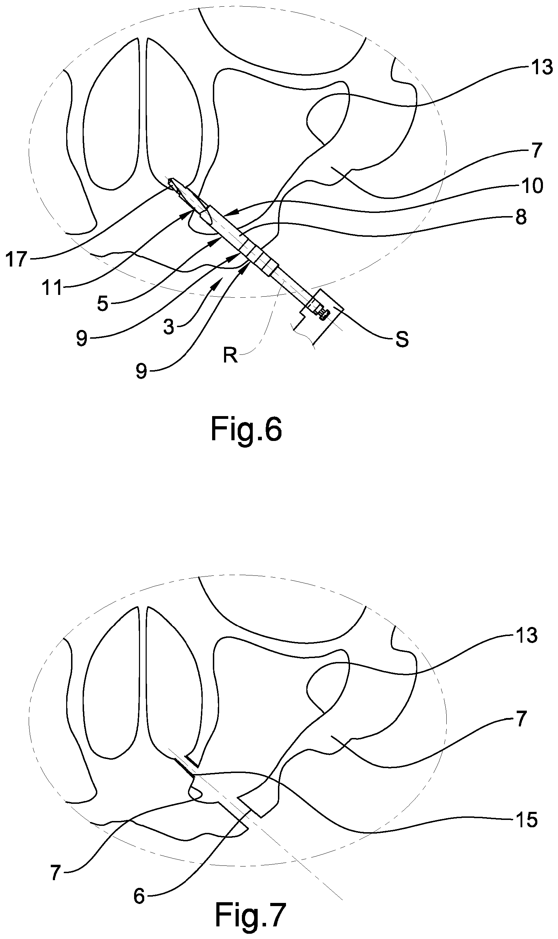

**In** other words, as will be explained in more detail later, the second apical working portion 11 is fitted into the first apical hole 14 and allows, when operated in rotation, to enlarge the latter and obtain the second apical hole 15 (Figure 7).

In actual facts, the second apical hole 15 therefore consists of the first apical hole 14 after the latter has been enlarged due to the action of the second apical working portion 11.

Usefully, the second apical working portion 11 comprises at least one guidance end 17 which is adapted to center the second apical working portion 11 in the first apical hole 14 and has a substantially constant cross section and a diameter substantially coinciding with the first working diameter B1.

Preferably, the guidance end 17 has a length of between 3.1 mm and 3.9 mm, better still of between 3.3 mm and 3.7 mm, preferably of 3.5 mm.

In addition, the second apical working portion 11 comprises at least one helical tip 29 which is positioned between the guidance end 17 and the non-working median portion 5 and has a diameter coinciding with the second working diameter B2.

Preferably, the helical tip 29 has a constant winding pitch.

In actual facts, all the operator has to do is to fit the guidance end 17 inside the first apical hole 14 until the helical tip 29 is stopped against the anterior wall 12 and to operate the second sinus burr 3 in rotation to remove the amount of bone necessary to obtain the second apical hole 15 from the first apical hole 14.

It should be noted, in fact, that the second sinus burr 3 is, in use, simultaneously guided both to the bony canal 6, wherein the non-working median portion 5 is fitted to size, and to the first apical hole 14, wherein the guidance end 17 is fitted to size.

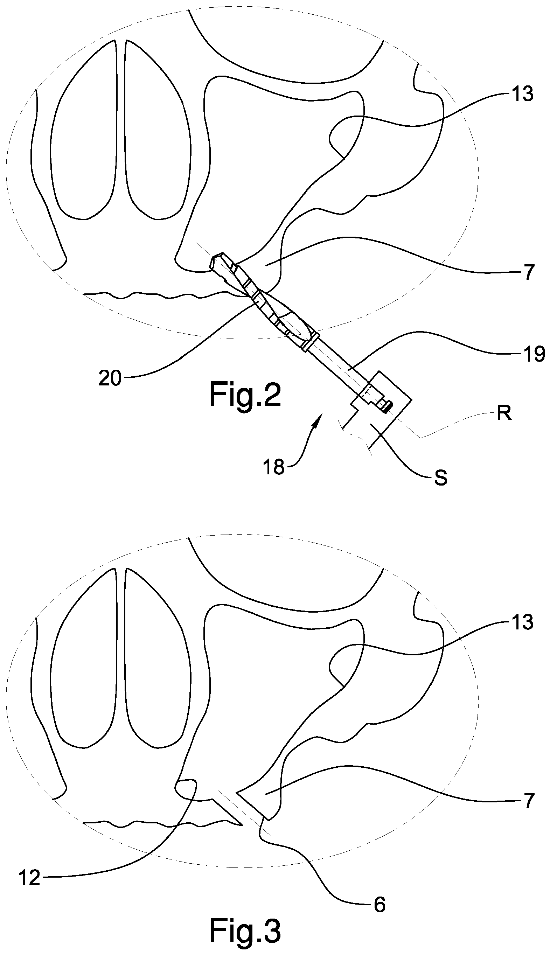

The kit 1 then comprises at least one maxillary burr 18, shown in Figures 1 and 2, comprising:
- at least one proximal part 19 connectable to the tool S for the setting in rotation around the axis of rotation R;
- at least one apical working part 20 which has a diameter substantially coinciding with the characteristic diameter A and is adapted to remove at least one part of the maxillary bone 7 to obtain the bony canal 6.

For example, the proximal part 19 consists, quite similarly to what said for the the proximal portion 4, of a stem provided with one end shaped to be coupled with the tool S and with one end, opposite the previous one, connected to the apical working part 20.

**In** the present case, the proximal part 19 and the apical working part 20 are aligned along a geometric axis (axis of the maxillary burr 18) that coincides with the axis of rotation R.

**In** this regard, the possibility cannot be ruled out that the proximal part 19 can be connected to a tool of a different type than the tool S, such as e.g. a tool of a larger or smaller size and/or a tool configured to set the maxillary burr 18 in rotation at an angular speed other than that imposed by the tool S on the sinus burr 2, 3.

Specifically, the proximal part 19 has a length of between 18.5 mm and 10.5 mm, better still of between 16.5 mm and 12.5 mm, preferably of 14.5 mm.

Again, the apical working part 20 has a length of between 15 mm and 23 mm, better still of between 17 mm and 21 mm, preferably of 19.02 mm.

This means that the maxillary burr 18 has a shorter overall length than both sinus burrs 2, 3.

This feature is clearly justified by the fact that the maxillary burr 18 has to remove a more superficial bone portion than the sinus burrs 2, 3 and, therefore, is sized with a shorter length than the latter.

**In** this regard, the apical working part 20 has a substantially helical conformation.

Again, the apical working part 20 has a constant winding pitch.

In actual facts, the apical working part 20 is quite similar, functionally and structurally, to a helical drill bit.

It is, at this point, easy to appreciate that the particular construction of the maxillary burr 18 and of the sinus burrs 2, 3 allows the former to obtain the bony canal 6 of the desired size on the maxillary bone 7 and the latter to fit to size its non-working median portion 5 inside it.

It should be specified, in all cases, that the kits 1 comprising a different number of sinus burrs 2, 3 cannot be ruled out.

For example, the kits 1 cannot be ruled out comprising an individual sinus burr 2, 3 having an apical working portion 10, **11,** consisting solely of a helical tip 29 with a constant diameter and equal to B2 and free of the guidance end 17.

Alternatively, kits 1 can be provided having an individual sinus burr 2, 3 with an apical working portion 10, **11** consisting of a pointed end 16 with a diameter B1 and of a helical tip 29 with a constant diameter equal to B2, wherein the helical tip 29 extends distally from the non-working median portion 5 and the pointed end 16 extends distally from the helical tip 29.

**In** addition, the kit 1 comprises at least one trans-sinus dental implant 21, 22, 23, 24 comprising at least one threaded post 25a, 25b, 25c, 25d that can be grafted into the bony canal 6 and into the apical hole 14, 15.

Specifically, the dental implant 21, 22, 23, 24 has at least one coronal section 26 with a coronal diameter C corresponding to the characteristic diameter A and at least one apical section 27 with an apical diameter D corresponding to the working diameter B1, B2.

Preferably, the apical diameter D corresponds to the second working diameter B2.

In this regard, it is specified that, in the context of this disclosure, to say that the coronal diameter C and the apical diameter D correspond to the characteristic diameter A and to the second working diameter B2 respectively, is to mean that the coronal diameter C and the apical diameter D are coincident with or slightly greater than the characteristic diameter A and the second working diameter B2, respectively.

**In** fact, the threaded post 25a, 25b, 25c, 25d is intended to be screwed into the bony canal 6 and into the second apical hole 15 within the space obtained by the maxillary burr 18 and the sinus burrs 2, 3 respectively, and the fact that the coronal diameter C and the apical diameter D are coincident with or slightly greater than the characteristic diameter A and the second working diameter B2 respectively, allows the threaded post 25a, 25b, 25c, 25d to self-thread into the bony canal 6 and into the second apical hole 15, thus ensuring a particularly stable coupling.

Usefully, at least one of either the coronal section 26 or the apical section 27 is substantially in the shape of a truncated cone.

Preferably, both the coronal section 26 and the apical section 27 are substantially in the shape of a truncated cone.

In this case, the tapering of the coronal section 26 is substantially smaller than the tapering of the apical section 27.

It should be noted in this regard that the term "tapering" refers to the ratio between the difference in the diameters of two sections and the axial distance between them.

In this sense, the coronal diameter C corresponds to the maximum diameter of the coronal section 26 (measured from ridge to ridge) and the apical diameter D corresponds to the minimum diameter of the apical section 27 (measured from ridge to ridge).

So, in the preferred embodiment, the coronal diameter C is of between 4.6 mm and 3.4 mm, better still of between 4.3 mm and 3.7 mm, preferably of 4.0 mm.

Again, the apical diameter D is of between 2.2 mm and 2.6 mm, better still of between 2.3 mm and 2.5 mm, preferably of 2.4 mm.

Evidently, in this case, the coronal diameter C is slightly larger than the characteristic diameter A and the apical diameter D coincides with the second working diameter B2.

In this way, as anticipated, the threaded post 25a, 25b, 25c, 25d may be grafted into the bony canal 6 and into the second apical hole 15 thus ensuring a stable and long-lasting coupling.

Usefully, the minimum diameter of the coronal section 26 is of between 3.2 mm and 3.7 mm, better still of between 3.3 mm and 3.6 mm, preferably of 3.47 mm.

In addition, the dental implant 21, 22, 23, 24 has at least one reference length L1, L2, L3, L4.

Specifically, the reference length L1, L2, L3, L4 is of between 16 mm and 30 mm.

Preferably, the kit 1 comprises a plurality of dental implants 21, 22, 23, 24 having different reference lengths L1, L2, L3, L4.

For example, in accordance with the preferred embodiment, the kit 1 comprises four dental implants 21, 22, 23, 24, of which:
- at least a first dental implant 21 comprising a first threaded post 25a and having a first reference length L1 of between 16 mm and 24 mm, better still of between 18 mm and 22 mm, even more preferably of 20 mm.
- at least a second dental implant 22 comprising a second threaded post 25b and having a second reference length L2 of between 18 mm and 26 mm, better still of between 20 mm and 24 mm, even more preferably of 22 mm.
- at least a third dental implant 23 comprising a third threaded post 25c and having a third reference length L3 of between 20 mm and 28 mm, better still of between 22 mm and 26 mm, even more preferably of 24 mm.
- at least a fourth dental implant 24 comprising a fourth threaded post 25d and having a fourth reference length L4 of between 22 mm and 30 mm, better still of between 24 mm and 28 mm, even more preferably of 26 mm.

Dental implants 21, 22, 23, 24 cannot however be ruled out having different reference lengths L1, L2, L3, L4 from those listed, e.g., longer.

Usefully, the reference markings 9 comprise at least one depth notch 28 corresponding to the reference length L1, L2, L3, L4.

This allows, usefully, guiding the operator during the removal of the anterior wall 12 of the maxillary sinus 13 thus allowing the same to work a section corresponding to the reference length L1, L2, L3, L4 of the dental implant 21, 22, 23, 24.

For the purpose of having a visual reference for each dental implant 21, 22, 23, 24 in the kit 1, the reference markings 9 comprise a corresponding plurality of depth notches 28, each of the depth notches 28 corresponding to a reference length L1, L2, L3, L4.

In this regard, stating that the depth notch 28 corresponds to a reference length L1, L2, L3, L4 means, in the context of the present disclosure, that the distance of the depth notch 28 from the tip of a sinus burr 2, 3 (i.e., from the point it is located furthest from the proximal portion 4) is equal to a reference length L1, L2, L3, L4.

In accordance with the preferred embodiment, each reference marking 9 comprises two depth notches 28 corresponding to the edges of the reference marking 9 arranged circumferentially along the entire smooth cylindrical surface 8.

By providing for two reference markings 9 it is possible to identify four edges and thus four depth notches 28 arranged at different distances, one for each of the four reference lengths L1, L2, L3, L4.

In this way, the operator can clearly work a section corresponding to a specific reference length L1, L2, L3, L4 decided according to the dental implant 21, 22, 23, 24 chosen.

Alternative embodiments of the present invention cannot, however, be ruled out wherein only one reference marking 9 and, therefore, two depth notches 28, or reference markings 9 and depth notches 28 of different types, are provided.

The operation of this invention is as follows.

In an individual dental session, a preparatory hole is perforated by sequentially using traditional burrs up to the maxillary burr 18, at the site where the future insertion of the dental implant 21, 22, 23, 24 is planned, until the floor of the maxillary sinus 13 is perforated (Figure 2).

The hole should be carried out paying special attention to the angle of insertion given to the dental implant 21, 22, 23, 24.

Thus, the bony canal 6 is created which allows the sinus burrs 2, 3 inserted into it to be guided later (Figure 3).

First of all, the first sinus burr 2 is inserted into the bony canal 6 to cut the first apical hole 14 on the anterior wall 12 of the maxillary sinus 13 (Figure 4 and Figure 5).

The bony canal 6 prepared in the residual ridge holds the first sinus burr 2 at the desired inclination, operating as a guide and preventing the first sinus burr 2 from changing direction and sliding upwards during perforation.

In addition, the pointed end 16 allows easy scratching the anterior wall 12 of the maxillary sinus 13 and preventing the first sinus burr 2 from sliding upwards.

At this point, by inserting the second sinus burr 3 into the bony canal 6 it is possible to adequately under-prepare the osteotomy and stabilize the implant apex (Figure 6).

The second sinus burr 3, in fact, has a compulsory position (i.e., the same as the first sinus burr 2, dictated by the inclination of the bony canal 6 formed by the maxillary burr 18) and, at this point, it is sufficient to operate the second sinus burr 3 and bring it to the desired penetration length to enlarge the first apical hole 14 to obtain the second apical hole 15 without the risk of the second sinus burr 3 oscillating or changing direction (Figure 7).

**In** this way, the dentist's movements are guided and therefore easier and more reproducible.

Not only that, but the placement of the trans-sinus dental implant 21, 22, 23, 24 is independent from the dentist's manual ability to handle the dentist's tool, further reducing the possibility of human errors during the execution of the surgical operation.

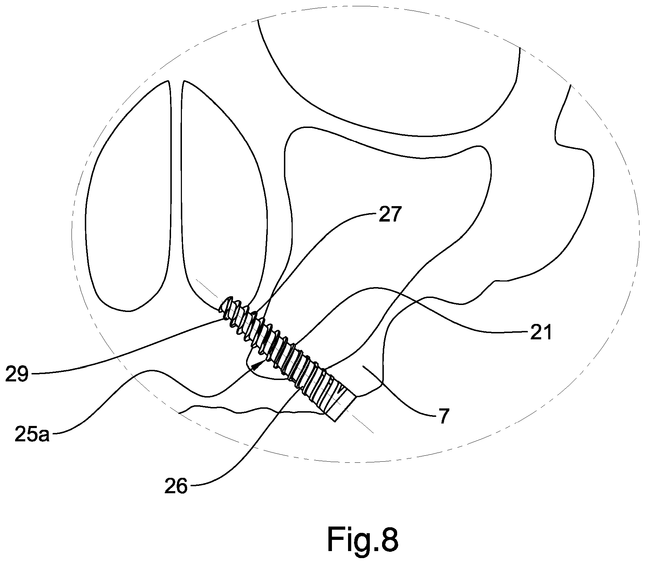

It is enough, at this point, to choose a dental implant 21, 22, 23, 24 and to graft the coronal section 26 and the apical section 27 of the corresponding threaded post 25a, 25b, 25c, 25d into the bony canal 6 and into the second apical hole 15 respectively, to finish the trans-sinus dental implant operation in a completely efficient and smooth manner (Figure 8 shows the first dental implant 21 inserted in place as an example, according to the manner just described).

It has in practice been ascertained that the described invention achieves the intended objects.

**In** particular, the fact is emphasized that the peculiar construction of the sinus burrs according to the invention allows trans-sinus dental implant operations to be carried out in a precise and guided manner, thus reducing the risk of twisting and thus ensuring a firm and long-lasting dental implant graft.

Not only that, but this also makes it possible to simplify the execution of the surgical operation and, at the same time, lower the costs associated with the procurement of the necessary tools and components.

In fact, the sinus burrs according to the invention are guided, during bone removal, thanks to the insertion to size of the non-working median portion into the corresponding bony canal.

This, therefore, allows the trans-sinus dental implant operation to be carried out efficiently, in a facilitated manner and without the use of any additional components other than just burrs and dental implants.

## Claims

1. Sinus burr (2, 3) for the execution of trans-sinus dental implant operations, comprising:
- at least one proximal portion (4) connectable to at least one tool (S) for setting in rotation;
- at least one non-working median portion (5) which has a characteristic diameter (A) and is adapted to be fitted inside a corresponding bony canal (6), obtained through the maxillary bone crest, without removal of the maxillary bone (7);
- at least one apical working portion (10, 11) which has one or more working diameters (B1, B2) and is adapted to perforate the anterior wall (12) of the maxillary sinus (13) to obtain on said anterior wall (12) at least one apical hole (14, 15);
wherein:
- said characteristic diameter (A) is comprised between 3.0 mm and 3.6 mm;
**characterized by** the fact that:
- all said working diameters (B1, B2) are smaller than said characteristic diameter (A).

2. Sinus burr (2, 3) according to claim 1, **characterized by** the fact that said non-working median portion (5) is shaped as a right cylinder and is provided with at least one smooth cylindrical surface (8) adapted to be placed in sliding contact with said bony canal (6).

3. Sinus burr (2, 3) according to one or more of claims 1 to 2, **characterized by** the fact that said non-working median portion (5) is provided with a plurality of reference markings (9) positioned on said smooth cylindrical surface (8).

4. Kit (1) for the execution of trans-sinus dental implant operations, **characterized by** the fact that it comprises:
- at least one sinus burr (2, 3) according to one or more of claims 1 to 3;
- at least one maxillary burr (18) comprising:
- at least one proximal part (19) connectable to said tool (S) for setting in rotation;
- at least one apical working part (20) which has a diameter coinciding with said characteristic diameter (A) and is adapted to remove at least one part of maxillary bone (7) to obtain said bony canal (6);
- at least one trans-sinus dental implant (21, 22, 23, 24) comprising at least one threaded post (25a, 25b, 25c, 25d) configured to be grafted into said bony canal (6) and into said apical hole (14, 15) and having at least one coronal section (26) with a coronal diameter (C) corresponding to said characteristic diameter (A) and at least one apical section (27) with an apical diameter (D) corresponding to said working diameter (B1, B2).

5. Kit (1) according to claim 4, **characterized by** the fact that it comprises at least two of said sinus burrs (2, 3), wherein:
- at least a first sinus burr (2) having a first apical working portion (10) which has a first working diameter (B1) and is adapted to obtain on said anterior wall (12) at least a first apical hole (14); and
- at least a second sinus burr (3) having a second apical working portion (11) which has a second working diameter (B2) larger than said first working diameter (B1) and is fittable into said first apical hole (14) to obtain at least a second apical hole (15) larger than said first apical hole (14).

6. Kit (1) according to claim 5, **characterized by** the fact that said first apical working portion (10) comprises at least one pointed end (16) having a decreasing cross-section in the direction away from said non-working median portion (5).

7. Kit (1) according to one or more of claims 5 to 6, **characterized by** the fact that said second apical working portion (11) comprises at least one guidance end (17) which is adapted to center said second apical working portion (11) in said first apical hole (14) and has a constant cross-section and a diameter coinciding with said first working diameter (B1).

8. Kit (1) according to claim 7, **characterized by** the fact that said second apical working portion (11) comprises at least one helical tip (29) which is positioned between said guidance end (17) and said non-working median portion (5) and has a diameter coinciding with said second working diameter (B2).

9. Kit (1) according to one or more of the preceding claims, **characterized by** the fact that said dental implant (21, 22, 23, 24) has at least one reference length (L1, L2, L3, L4) and that said reference markings (9) comprise at least one depth notch (28) corresponding to said reference length (L1, L2, L3, L4).

10. Kit (1) according to claim 9, **characterized by** the fact that it comprises a plurality of said dental implants (21, 22, 23, 24) having said reference lengths (L1, L2, L3, L4) different from each other and that said reference markings (9) comprise a corresponding plurality of said depth notches (28), each of said depth notches (28) corresponding to one said reference length (L1, L2, L3, L4).

## Patentansprüche

1. Sinusfräser (2, 3) zur Durchführung von transsinusalen ZahnimplantatOperationen, umfassend:
- mindestens einen proximalen Abschnitt (4), der mit mindestens einem Werkzeug (S) zur Erzeugung einer Drehbewegung verbindbar ist;
- mindestens einen nicht arbeitenden mittleren Abschnitt (5), der einen charakteristischen Durchmesser (A) aufweist und ausgebildet ist, in einen entsprechenden Knochenkanal (6) zu passen, der durch den Kieferkamm hindurch geführt wird, ohne dass der Oberkieferknochen (7) entfernt werden muss;
- mindestens einen apikalen Arbeitsabschnitt (10, 11), der einen oder mehrere Arbeitsdurchmesser (B1, B2) aufweist und ausgebildet ist, die Vorderwand (12) der Kieferhöhle (13) zu durchlochen, um an der Vorderwand (12) mindestens ein apikales Loch (14, 15) zu erzeugen;
wobei der charakteristische Durchmesser (A) zwischen 3,0 mm und 3,6 mm liegt;
**dadurch gekennzeichnet, dass** alle Arbeitsdurchmesser (B1, B2) kleiner sind als der charakteristische Durchmesser (A).

2. Sinusfräser (2, 3) nach Anspruch 1, **dadurch gekennzeichnet, dass** der nicht arbeitende mittlere Abschnitt (5) als gerader Zylinder geformt ist und mit mindestens einer glatten zylindrischen Oberfläche (8) versehen ist, die ausgebildet ist, in Gleitkontakt mit dem Knochenkanal (6) gebracht zu werden.

3. Sinusfräser (2, 3) nach einem oder mehreren der Ansprüche 1 bis 2, **dadurch gekennzeichnet, dass** der nicht arbeitende mittlere Abschnitt (5) mit einer Vielzahl von Referenzmarkierungen (9) versehen ist, die auf der glatten zylindrischen Oberfläche (8) angeordnet sind.

4. Set (1) zur Durchführung von transsinusalen Zahnimplantatoperationen, **dadurch gekennzeichnet, dass** es umfasst:
- mindestens einen Sinusfräser (2, 3) nach einem oder mehreren der Ansprüche 1 bis 3;
- mindestens einen Oberkieferfräser (18), der umfasst:
- mindestens einen proximalen Teil (19), der mit dem Werkzeug (S) zur Erzeugung einer Drehbewegung verbindbar ist;
- mindestens einen apikalen Arbeitsteil (20), der einen Durchmesser aufweist, der mit dem charakteristischen Durchmesser (A) übereinstimmt, und ausgebildet ist, mindestens einen Teil des Oberkieferknochens (7) zu entfernen, um den Knochenkanal (6) zu erhalten;
- mindestens ein transsinusales Zahnimplantat (21, 22, 23, 24), das mindestens einen Gewindestift (25a, 25b, 25c, 25d), der ausgebildet ist, in den Knochenkanal (6) und in das apikale Loch (14, 15) implantiert zu werden, und der mindestens einen koronalen Abschnitt (26) mit einem koronalen Durchmesser (C) hat, der dem charakteristischen Durchmesser (A) entspricht, sowie mindestens einen apikalen Abschnitt (27) mit einem apikalen Durchmesser (D) umfasst, der dem Arbeitsdurchmesser (B1, B2) entspricht.

5. Set (1) nach Anspruch 4, **dadurch gekennzeichnet, dass** es mindestens zwei der Sinusfräser (2, 3) umfasst, wobei:
- mindestens ein erster Sinusfräser (2) mit einem ersten apikalen Arbeitsabschnitt (10), der einen ersten Arbeitsdurchmesser (B1) aufweist und ausgebildet ist, an der Vorderwand (12) mindestens ein erstes apikales Loch (14) zu erzeugen; und
- mindestens ein zweiten Sinusfräser (3) mit einem zweiten apikalen Arbeitsabschnitt (11), der einen zweiten Arbeitsdurchmesser (B2) aufweist, der größer ist als der erste Arbeitsdurchmesser (B1), und der in das erste apikale Loch (14) einführbar ist, um mindestens ein zweites apikales Loch (15) zu erzeugen, das größer ist als das erste apikale Loch (14).

6. Set (1) nach Anspruch 5, **dadurch gekennzeichnet, dass** der erste apikale Arbeitsabschnitt (10) mindestens ein spitzes Ende (16) aufweist, dessen Querschnitt in Richtung weg von dem nicht arbeitenden mittleren Abschnitt (5) abnimmt.

7. Set (1) nach einem oder mehreren der Ansprüche 5 bis 6, **dadurch gekennzeichnet, dass** der zweite apikale Arbeitsabschnitt (11) mindestens ein Führungsende (17) umfasst, das ausgebildet ist, den zweiten apikalen Arbeitsabschnitt (11) in dem ersten apikalen Loch (14) zu zentrieren, und einen konstanten Querschnitt sowie einen Durchmesser aufweist, der mit dem ersten Arbeitsdurchmesser (B1) übereinstimmt.

8. Set (1) nach Anspruch 7, **dadurch gekennzeichnet, dass** der zweite apikale Arbeitsabschnitt (11) mindestens eine spiralförmige Spitze (29) umfasst, die zwischen dem Führungsende (17) und dem nicht arbeitenden mittleren Abschnitt (5) positioniert ist und einen Durchmesser aufweist, der mit dem zweiten Arbeitsdurchmesser (B2) übereinstimmt.

9. Set (1) nach einem oder mehreren der vorstehenden Ansprüche, **dadurch gekennzeichnet, dass** das Zahnimplantat (21, 22, 23, 24) mindestens eine Referenzlänge (L1, L2, L3, L4) aufweist und dass die Referenzmarkierungen (9) mindestens eine der Referenzlänge (L1, L2, L3, L4) entsprechende Vertiefungskerbe (28) umfassen.

10. Set (1) nach Anspruch 9, **dadurch gekennzeichnet, dass** es eine Vielzahl der genannten Zahnimplantate (21, 22, 23, 24) mit voneinander unterschiedlichen Referenzlängen (L1, L2, L3, L4) umfasst und dass die Referenzmarkierungen (9) eine entsprechende Vielzahl der Vertiefungskerben (28) umfassen, wobei jede der Vertiefungskerben (28) einer der Referenzlängen (L1, L2, L3, L4) entspricht.

## Revendications

1. - Fraise de sinus (2, 3) pour l'exécution d'opérations d'implantation dentaire trans-sinus, comprenant :
- au moins une partie proximale (4) apte à être reliée à au moins un outil (S) pour une mise en rotation ;
- au moins une partie médiane non de travail (5) qui présente un diamètre caractéristique (A) et est apte à être encastrée à l'intérieur d'un canal osseux correspondant (6), formé à travers la crête osseuse maxillaire, sans ablation de l'os maxillaire (7) ;
- au moins une partie de travail apicale (10, 11) qui présente un ou plusieurs diamètres de travail (B1, B2) et est apte à perforer la paroi antérieure (12) du sinus maxillaire (13) afin d'obtenir sur ladite paroi antérieure (12) au moins un trou apical (14, 15) ;
dans laquelle :
- ledit diamètre caractéristique (A) est compris entre 3,0 mm et 3,6 mm ;
**caractérisée par le fait que** :
- l'ensemble desdits diamètres de travail (B1, B2) sont inférieurs audit diamètre caractéristique (A).

2. - Fraise de sinus (2, 3) selon la revendication 1, **caractérisée par le fait que** ladite partie médiane non de travail (5) a la forme d'un cylindre droit et comporte au moins une surface cylindrique lisse (8) apte à être placée en contact glissant avec ledit canal osseux (6).

3. - Fraise de sinus (2, 3) selon une ou plusieurs des revendications 1 à 2, **caractérisée par le fait que** ladite partie médiane non de travail (5) comporte une pluralité de repères de référence (9) positionnés sur ladite surface cylindrique lisse (8).

4. - Kit (1) pour l'exécution d'opérations d'implantation dentaire trans-sinus, **caractérisé par le fait qu'**il comprend :
- au moins une fraise de sinus (2, 3) selon l'une ou plusieurs des revendications 1 à 3 ;
- au moins une fraise maxillaire (18) comprenant :
- au moins une partie proximale (19) apte à être reliée audit outil (S) pour une mise en rotation ;
- au moins une partie de travail apicale (20) qui présente un diamètre coïncidant avec ledit diamètre caractéristique (A) et est apte à retirer au moins une partie de l'os maxillaire (7) afin d'obtenir ledit canal osseux (6) ;
- au moins un implant dentaire trans-sinus (21, 22, 23, 24) comprenant au moins une tige filetée (25a, 25b, 25c, 25d) configurée pour être greffée dans ledit canal osseux (6) et dans ledit trou apical (14, 15) et comportant au moins une section coronaire (26) avec un diamètre coronaire (C) correspondant audit diamètre caractéristique (A) et au moins une section apicale (27) avec un diamètre apical (D) correspondant audit diamètre de travail (B1, B2).

5. - Kit (1) selon la revendication 4, **caractérisé par le fait qu'**il comprend au moins deux desdites fraises de sinus (2, 3), dans lequel :
- au moins une première fraise de sinus (2) comporte une première partie de travail apicale (10) qui présente un premier diamètre de travail (B1) et est apte à former sur ladite paroi antérieure (12) au moins un premier trou apical (14) ; et
- au moins une seconde fraise de sinus (3) comporte une seconde partie de travail apicale (11) qui présente un second diamètre de travail (B2) supérieur audit premier diamètre de travail (B1) et est apte à être encastrée dans ledit premier trou apical (14) pour former au moins un second trou apical (15) plus grand que ledit premier trou apical (14).

6. - Kit (1) selon la revendication 5, **caractérisé par le fait que** ladite première partie de travail apicale (10) comprend au moins une extrémité pointue (16) présentant une section transversale décroissante dans la direction s'éloignant de ladite partie médiane non de travail (5).

7. - Kit (1) selon une ou plusieurs des revendications 5 à 6, **caractérisé par le fait que** ladite seconde partie de travail apicale (11) comprend au moins une extrémité de guidage (17) qui est apte à centrer ladite seconde partie de travail apicale (11) dans ledit premier trou apical (14) et présente une section transversale constante et un diamètre coïncidant avec ledit premier diamètre de travail (B1).

8. - Kit (1) selon la revendication 7, **caractérisé par le fait que** ladite seconde partie de travail apicale (11) comprend au moins une pointe hélicoïdale (29) qui est positionnée entre ladite extrémité de guidage (17) et ladite partie médiane non de travail (5) et présente un diamètre coïncidant avec ledit second diamètre de travail (B2).

9. - Kit (1) selon une ou plusieurs des revendications précédentes, **caractérisé par le fait que** ledit implant dentaire (21, 22, 23, 24) présente au moins une longueur de référence (L1, L2, L3, L4) et **par le fait que** lesdits repères de référence (9) comprennent au moins une encoche en profondeur (28) correspondant à ladite longueur de référence (L1, L2, L3, L4).

10. - Kit (1) selon la revendication 9, **caractérisé par le fait qu'**il comprend une pluralité desdits implants dentaires (21, 22, 23, 24) présentant lesdites longueurs de référence (L1, L2, L3, L4) différentes les unes des autres et **par le fait que** lesdits repères de référence (9) comprennent une pluralité correspondante desdites encoches en profondeur (28), chacune desdites encoches en profondeur (28) correspondant à l'une desdites longueurs de référence (L1, L2, L3, L4).
